# EUROPEAN PATENT APPLICATION

(11) **EP 2 827 268 A1**
(43) Date of publication of application: **21.01.2015**
(21) Application number: 13760860.0
(22) Date of filing: 15.03.2013
(51) Int. Cl.: G06F 21/31

(54) **INFORMATION TERMINAL AND EXECUTION CONTROL METHOD**

(30) Priority: 16.03.2012 JP 2012061066
(71) Applicant: NTT Docomo, Inc., Tokyo 100-6150 (JP)
(72) Inventor: WATANABE Reiji, Tokyo 100-6150 (JP)
(74) Representative: Beder, Jens
(86) International application number: PCT/JP2013/057479
(87) International publication number: WO 2013/137455

(57) **Abstract**

A portable terminal according to one embodiment includes a touch panel including a press detection mechanism capable of accepting a press operation on an operating surface, a detection means to detect a first operation being an operation of sliding a contact object over the operating surface of the touch panel during a period from contact to release of the contact object to/from the operating surface and a second operation being the press operation performed during the first operation through the press detection mechanism, a storage means to store an authentication pattern composed of the first operation and the second operation, and an execution control means to control whether to execute a function of the information terminal based on a result of verification between an input pattern composed of the first operation and the second operation detected by the detection means and the authentication pattern.

## Description

### Technical Field

The present invention relates to an information terminal and an execution control method.

### Background Art

Portable terminals typically have a function to automatically or manually disable the operation of the information, terminal (which is also referred to hereinafter as "lock" the terminal) in order to prevent accidental operation when touching a screen or prevent another person from using the information terminal when the terminal is lost or the like. The lock of the information terminal can be released by entering a password through a virtual keyboard displayed on a touch panel or by dragging a finger or the like across the touch panel and thereby inputting trajectory information (e.g. Patent Literature 1), for example.

### Citation List

### Patent Literature

Patent Literature 1: Japanese Patent Application Laid-Open Publication No. 2007-257140

### Summary of Invention

### Technical Problem

However, although personal identification information as a password to be entered by a user is convenient, the security level is relatively low. Further, in the method disclosed in Patent Literature 1, a method that slides a finger or the like along the points displayed on the touch panel and thereby inputs the trajectory (pattern screen lock system) and the like, the trajectory is easily recognized by another person, and therefore the security level is relatively low.

An object of the present invention is to provide an information terminal and an execution control method capable of enhancing the security level without losing convenience.

### Solution to Problem

An information terminal according to one aspect of the present invention includes a touch panel configured to include a press detection mechanism capable of accepting a press operation on an operating surface, a detection means configured to detect a first operation being an operation of sliding a contact object over the operating surface of the touch panel during a period from contact to release of the contact object to/from the operating surface and a second operation being the press operation performed during the first operation through the press detection mechanism, a storage means configured to store an authentication pattern composed of the first operation and the second operation, and an execution control means configured to control whether to execute a function of the information terminal based on a result of verification between an input pattern composed of the first operation and the second operation detected by the detection means and the authentication pattern.

An execution control method according to one aspect of the present invention is an execution control method in an information terminal with a touch panel including a press detection mechanism capable of accepting a press operation on an operating surface, the method including a detection step of detecting a first operation being an operation of sliding a contact object over the operating surface of the touch panel during a period from contact to release of the contact object to/from the operating surface and a second operation being the press operation performed during the first operation through the press detection mechanism, a storage step of storing an authentication pattern composed of the first operation and the second operation into a storage means, and an execution control step of controlling whether to execute a function of the information terminal based on a result of verification between an input pattern composed of the first operation and the second operation detected by the detection means and the authentication pattern.

The first operation is an operation that slides a finger, a touch pen or the like in touch with the operating screen of the touch panel. Generally, one-time first operation is an operation from touching to releasing the operating surface of the touch panel, which is an operation that can be made with a single stroke of motion. However, in this specification, even an operation that releases a contact object from the operating surface once under a specified condition and then brings it into contact with the operating surface again is also regarded as one-time first operation in some cases.

Because the information terminal and the execution control method described above have a configuration that allows detection of a press of the touch panel, and therefore not only the first operation but also the second operation can be performed on the touch panel. It is thereby possible to use the input pattern composed of a combination of the first operation and the second operation as the authentication pattern. The input pattern is difficult for another person to recognize the input content compared with an input pattern input by the first operation only, and the security level can be thereby enhanced.

Further, the information terminal and the execution control method described above store the authentication pattern composed of the first operation on the touch panel and the second operation performed during the first operation and, when executing a function of the information terminal, detects the first operation on the touch panel and the second operation performed during the first operation. Then, based on a result of verification between the input pattern composed of the detected first operation and the second operation performed during the first operation and the authentication pattern, whether or not to execute the function of the information terminal is controlled. It is thereby possible to achieve a high level of security witch a simple operation on the touch panel.

Further, in one embodiment, the information terminal may further include an input control means configured to control the execution control means to form the input pattern based on an operation detected until release of the contact object from the touch panel when the press operation is not detected upon release from the touch panel by the detection means, and control the execution control means to form the input pattern including an operation detected subsequently when the press operation is detected upon release of the contact object from the touch panel by the detection means.

In this configuration, although the input (first operation) ends at the moment when a user releases the finger from the operating surface of the touch panel according to related art, the input can continue from the part where the user touches the operating surface again by adding the second operation at the last of the first operation. By such continuity, it is possible to set a complicated authentication pattern such as an authentication pattern (an input pattern) formed by sliding a finger or the like over two points physically distant from each other, for example, and the security level can be enhanced.

Further, in one embodiment, a plurality of authentication points may be displayed on the touch panel, the detection means may detect authentication points touched during the first operation and presence or absence of the second operation on each of the authentication points, the storage means may store an authentication pattern composed of authentication points touched during the first operation and presence or absence of the second operation on each of the authentication points, and the execution control means may control whether to execute a function of the information terminal based on a result of verification between an input pattern composed of the authentication points and the presence or absence of the second operation on each of the authentication points detected by the detection means and the authentication pattern.

In this configuration, the authentication pattern composed of the authentication points touched during the first operation and the presence or absence of the second operation on each of the authentication points is stored, and when executing a function of the information terminal, the authentication points touched during the first operation and the presence or absence of the second operation on each of the authentication points are detected. Then, based on a result of verification between the detected authentication points and the presence or absence of the second operation on each of the authentication points and the authentication pattern, whether or not to execute the function of the information terminal is controlled. It is thereby possible to prompt intuitive input such as sliding the finger over the authentication points and allow quick input compared with a password or PIN.

Further, in one embodiment, total nine authentication points, three by three in directions orthogonal to each other, may be displayed on the touch panel.

Further, in one embodiment, the detection means may detect a trajectory of the first operation on the touch panel and a press position when the second operation is performed during the first operation, the storage means may store an authentication pattern composed of the trajectory of the first operation on the touch panel and the press position when the second operation is performed during the first operation, and the execution control means may control whether to execute a function of the information terminal based on a result of verification between an input pattern composed of the trajectory of the first operation and the press position when the second operation is performed during the first operation detected by the detection means and the authentication pattern.

In this configuration, the authentication pattern composed of the trajectory of the first operation on the touch panel and the press position when the second operation is performed during the first operation is stored, and when executing a function of the information terminal, the trajectory of the first operation on the touch panel and the press position when the second operation is performed during the first operation are detected. Then, based on a result of verification between the input pattern composed of the trajectory of the first operation and the press position when the second operation is performed during the first operation and the authentication pattern, whether or not to execute the function of the information terminal is controlled. This makes it difficult for another person to accurately recognize the input content.

Further, in one embodiment, to execute the function may be to release a lock or to start an application. It is thereby possible to execute the function or release a lock with a simple operation on the touch panel.

### Advantageous Effects of Invention

According to one aspect of the present invention, it is possible to enhance the security level without losing convenience.

### Brief Description of Drawings

Fig. 1 is an outline view showing an external configuration of a portable terminal according to one embodiment.
Fig. 2 is a sectional view showing a click mechanism of the portable terminal shown in Fig. 1.
Fig. 3 is a block diagram showing a functional configuration of the portable terminal shown in Fig. 1.
Fig. 4 is a diagram showing an example of an unlock screen displayed on a touch panel display.
Fig. 5 is a diagram showing an example of an input pattern.
Fig. 6 is a diagram showing a hardware configuration of the portable terminal shown in Fig. 1.
Fig. 7 is a flowchart showing a flow of an execution control process in the portable terminal shown in Fig. 1.
Fig. 8 is a diagram illustrating an example of an unlock method for a portable terminal according to another embodiment.

### Description of Embodiments

An embodiment of the present invention is described hereinafter with reference to the appended drawings. Where possible, the same elements are denoted by the same reference numerals and redundant description thereof is omitted. The dimension ratio of the drawings does not necessarily coincide with the description. Further, in the description, a term indicating the direction such as "up" and "down" is a term used for the sake of convenience based on the state shown in the drawings.

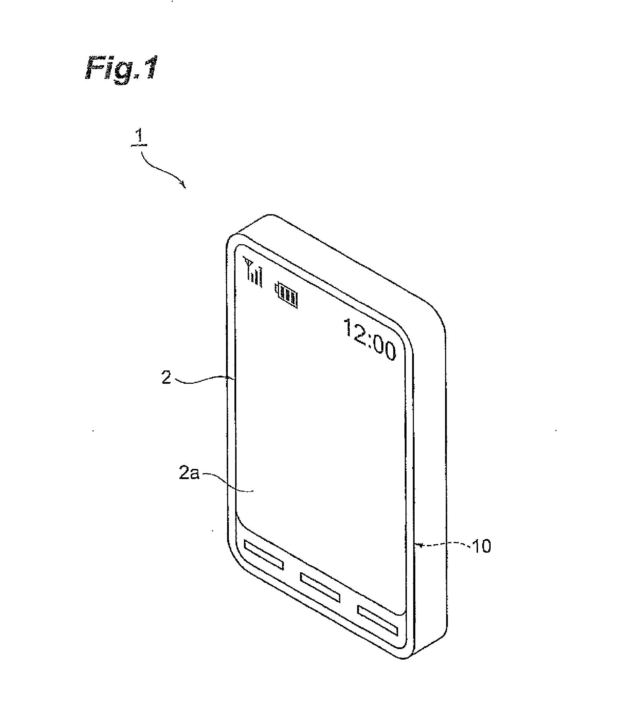

Fig. 1 is an outline view showing an external configuration of a portable terminal according to one embodiment. As shown in Fig. 1, a portable terminal (information terminal) 1 is a communication terminal having a touch panel display (touch panel) 2, and by touching the touch panel display, an application can be started, or a function or the like corresponding to an object (icon) in an application can be executed. The portable terminal 1 has a click mechanism 10 under the touch panel display 2. A user can perform a click operation (an operation that presses an operating surface of the touch panel) by pressing the touch panel display 2.

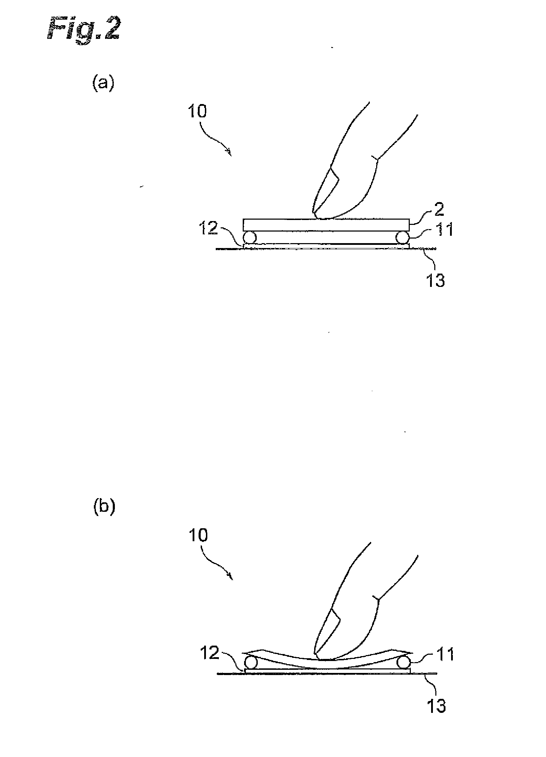

Figs. 2(a) and 2(b) are sectional views showing a click mechanism (press detection mechanism) of the portable terminal. On the backside of an operating surface 2a of the touch panel display 2, the click mechanism 10 for giving a click feeling when pressed by a user and detecting (accepting) the press operation is provided. The click mechanism 10 includes a support member 11 that supports the touch panel display 2 on a board 13 and a contact sensor 12 that is mounted on the board 13. In the click mechanism 10, the touch panel display 2 pressed by a user is bent to come into contact with the contact sensor 12 (see Fig. 2(b)) and thereby the press of the touch panel display 2 is detected. It is thereby possible to give the user a click feeling and detect the press. Note that the click mechanism is not limited to the above, and it may have a structure having a tact switch (not shown) or the like mounted on the backside of the touch panel display 2 or on a board (not shown) that supports the touch panel display 2 and movable up and down (in the direction orthogonal to the operating surface), where the tact switch turns on when the touch panel display 2 is pressed down.

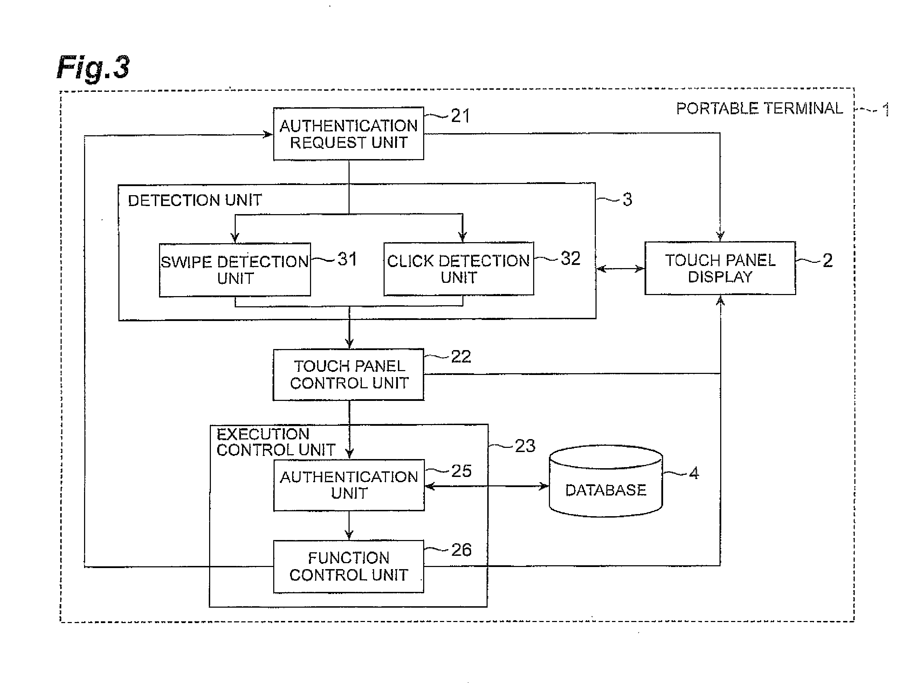

Fig. 3 is a block diagram showing a functional configuration of the portable terminal 1 according to this embodiment. As shown in Fig. 3, the portable terminal 1 includes the touch panel display 2, an authentication request unit 21, a detection unit (detection means) 3 including a swipe detection unit 31 and a click detection unit 32, a touch panel control unit (input control means) 22, an execution control unit (execution control means) 23 including an authentication unit 25 and a function control unit 26, and a database (storage means) 4. Each component is described hereinbelow.

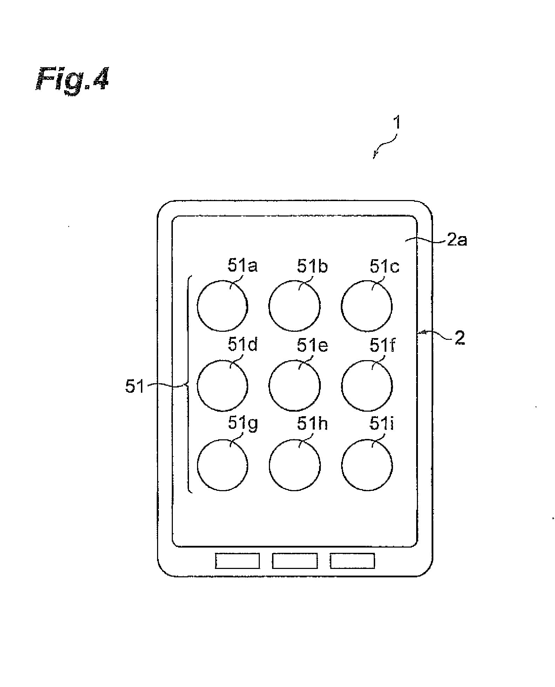

The touch panel display 2 is a part that detects a touch position of a user's finger or the like (including a touch pen etc.). Further, the touch panel display 2 has a display function, and when an instruction signal is input from the authentication request unit 21, which is described later, the touch panel display 2 displays an unlock screen (see Fig. 4), which is described later, and a registration screen for registering an authentication pattern for releasing a lock, for example. Further, when a permission signal is input from the authentication unit 25, which is described later, the touch panel display 2 displays a screen notifying that a lock is released. When a rejection signal is input from the authentication unit 25, the touch panel display 2 displays an unlock screen again.

The unlock screen that is displayed on the touch panel display 2 of the portable terminal 1 according to this embodiment is described hereinafter with reference to Fig. 4. When an instruction signal is input from the authentication request unit 21, which is described later, the touch panel display 2 displays total nine authentication points (points) 51 (51a to 51i), which are arranged three vertically and three horizontally.

The authentication request unit 21 is a part that requests start of an authentication process to the detection unit 3 including the swipe detection unit 31 and the click detection unit 32, and the touch panel display 2 upon occurrence of an event requiring authentication. When the event occurs, the authentication request unit 21 detects the event and outputs a signal for starting an authentication process to the detection unit 3 including the swipe detection unit 31 and the click detection unit 32, and the touch panel display 2.

The detection unit 3 is a part that detects a swipe operation (a first operation that slides a contact object over the operating surface of the touch panel) on the touch panel display 2 and a click (a second operation that presses the operating surface of the touch panel) performed during the swipe operation, and it includes the swipe detection unit 31 that detects a swipe operation and the click detection unit 32 that detects a click performed during the swipe operation.

The swipe detection unit 31 is a part that detects a swipe operation on the operating surface 2a of the touch panel display 2. This operation can be acquired by using a basic function of the touch panel display 2. In the portable terminal 1 according to this embodiment, the swipe detection unit 31 detects the authentication points 51 touched during the swipe operation. To be specific, the swipe detection unit 31 acquires coordinate information indicating the coordinates of the authentication points (any of 51a to 51i) touched by a user and further acquires contact order information of the touched authentication point coordinates. The swipe detection unit 31 outputs the coordinate information and the coordinate contact order information to the touch panel control unit 22, which is described later.

The click detection unit 32 is a part that detects an operation of clicking the operating surface 2a of the touch panel display 2 which is performed during the above-described swipe operation. This operation can be acquired by using information of the contact sensor 12 or the like include in the click mechanism 10 described above. In the portable terminal 1 according to this embodiment, the click detection unit 32 detects the presence or absence of a click on each of the authentication points 51 (51a to 51i). To be specific, the click detection unit 32 acquires the coordinates when clicked by a user. The click detection unit 32 outputs the coordinate information to the touch panel control unit 22. Note that the coordinate information of the clicked position can be acquired by starting a timer from the start of the swipe operation and acquiring a finger's contact position or the like at the time of the click from the touch panel display 2 or the like, for example.

Note that the swipe operation, which is an operation that swipes the operating surface 2a of the touch panel display 2, is generally an operation from touching to releasing the operating surface 2a of the touch panel display 2, which is an operation that can be made with a single stroke of motion. However, when a click operation is made when releasing the operating surface 2a of the touch panel display 2, the touch panel control unit 22 of the portable terminal 1 according to this embodiment detects a stroke of operation starting from the contact position and then releasing the operating surface 2a of the touch panel display 2 as a swipe operation.

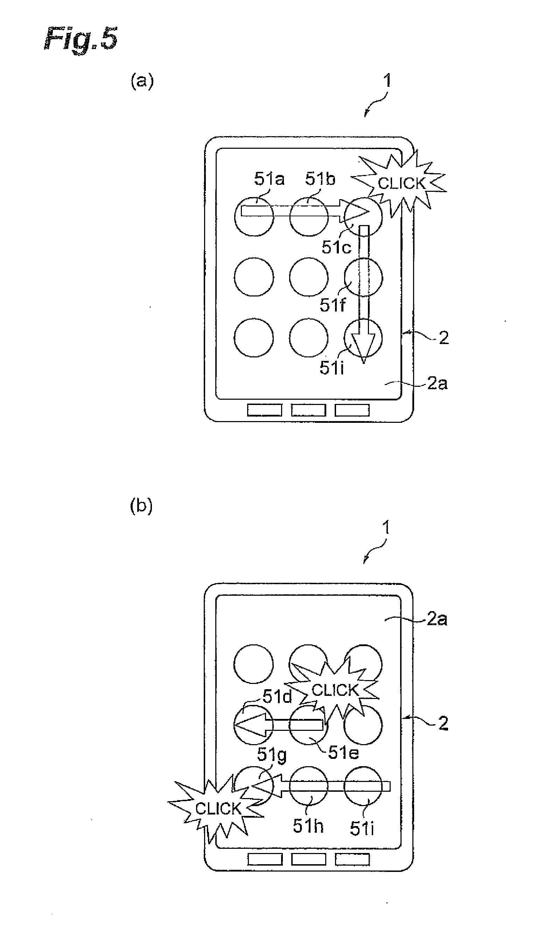

Figs. 5(a) and 5(b) are diagrams showing examples of the input pattern. In the touch panel control unit 22 of the portable terminal 1 according to this embodiment, when an operation of sequentially touching the authentication points 51 a, 51b and 51 c and then clicking on the authentication point 51c, and subsequently, without releasing the finger from the operating surface 2a, sequentially touching the authentication points 51f and 51i and then releasing a finger from the operating surface 2a is performed as shown in Figs. 5(a), for example, the input pattern of "sequentially touching the authentication points 51a, 51b, 51c, 51f and 51i and clicking on the authentication point 51c" can be acquired. Further, when an operation of sequentially touching the authentication points 51i, 51h and 51g and then clicking on the authentication point 51g, and, after that, sequentially touching the authentication points 51e and 51d and then releasing the finger from the operating surface 2a is performed as shown in Figs. 5(b), for example, the input pattern of "sequentially touching the authentication points 51i, 51h, 51g, 51e and 51d and clicking on the authentication point 51g and the authentication point 51e" can be acquired.

The touch panel control unit 22 is a part that acquires the input pattern composed of the swipe operation and the click operation based on the swipe operation and the click operation detected by the swipe detection unit 31 and the click detection unit 32, respectively. Further, the touch panel control unit 22 is a part that, when a finger is released from operating surface 2a of the touch panel display 2, determines whether a click is made on the authentication point when the finger is released.

When it is detected that a click is made on the authentication point when a user releases the finger from the authentication point, the touch panel control unit 22 requests the authentication request unit 21 so that the touch panel display 2 continues the authentication process. On the other hand, when the click is not detected, the touch panel control unit 22 outputs the input pattern acquired from the swipe detection unit 31 and the click detection unit 32 to the authentication unit 25 included in the execution control unit 23, which is described later.

The database 4 is a part that stores various kinds of data in the portable terminal 1. The database 4 of the portable terminal 1 according to this embodiment also stores an authentication pattern composed of the swipe operation on the touch panel display 2 and the click operation performed during the swipe operation. In the portable terminal 1 according to this embodiment, the database 4 stores the authentication pattern composed of the authentication points 51 (which are arbitrarily selected from the authentication points 51a to 51i) touched during the swipe operation and the presence or absence of a click on each of the authentication pattern. The authentication pattern can be stored as information "sequentially touching the authentication points 51a, 51b, 51c, 51f and 51i and clicking on the authentication point 51c" (see Fig. 5(a)), for example.

The execution control unit 23 is a part that controls whether or not to execute the function of the portable terminal 1 based on the input pattern composed of the swipe operation and the click operation performed during the swipe operation detected by the detection unit 3 and the authentication pattern stored in the database 4, and it includes the authentication unit 25 and the function control unit 26.

The authentication unit 25 verifies the authentication points 51 (any one or a plurality of the authentication points 51a to 51i) and the presence or absence of a click on each of the authentication points 51 (any one or a plurality of the authentication points 51 a to 51i) detected by the detection unit 3 against the authentication pattern stored in the database 4. To be specific, the authentication unit 25 verifies the input pattern where the detection results by the swipe detection unit 31 and the click detection unit 32 are arranged in the order of detection against the authentication pattern stored in the database 4.

The function control unit 26 controls whether or not to execute the function of the portable terminal 1 based on the verification result by the authentication unit 25. To be specific, the input pattern where the detection results by the swipe detection unit 31 and the click detection unit 32 are arranged in the order of detection is verified against the authentication pattern stored in the database 4, and when they match, the function control unit 26 executes unlock of the portable terminal 1.

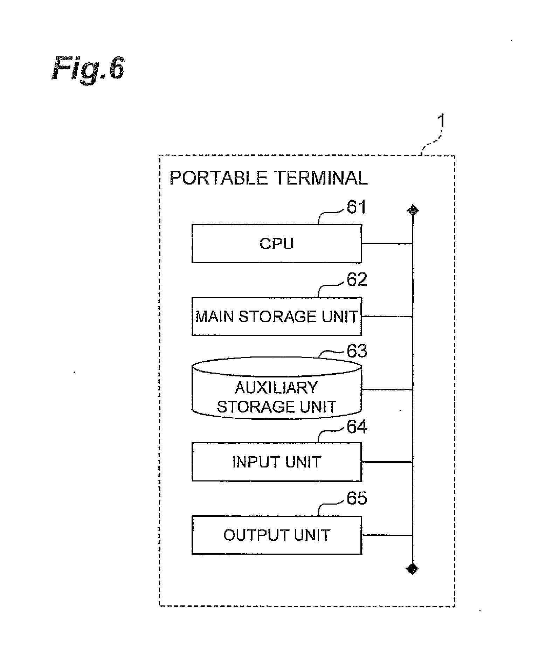

Fig. 6 is a diagram showing a hardware configuration of the portable terminal. As shown in Fig. 6, the portable terminal 1 includes a CPU (central processing unit) 61 that executes the execution control process in the portable terminal 1, which is described later" an operating system, an application program and the like, a main storage unit 62 composed of ROM (read only memory) and RAM (random access memory), an auxiliary storage unit 63 composed of a hard disk, a memory and the like such as the database (see Fig. 1) described above, an input unit 64 such as a menu button and the touch panel display 2 (see Fig. 1), and an output unit 65 such as the touch panel display 2 (see Fig. 1). The functions of the authentication request unit 21, the detection unit 3, the touch panel control unit 22 and the execution control unit 23 described above are executed by reading given software into the CPU 61 and the main storage unit 62 and making control by the CPU 61.

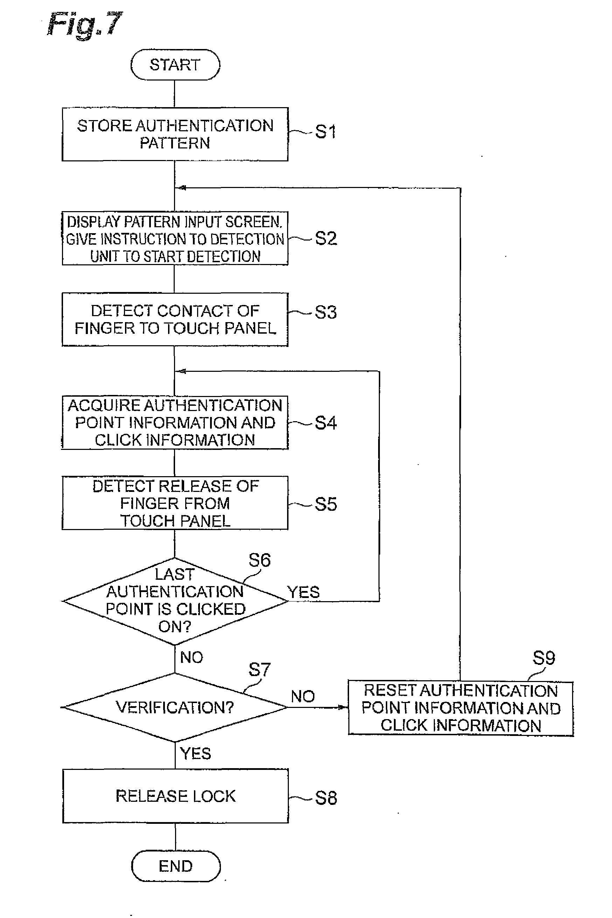

A process when performing the execution control method according to this embodiment for a user is described hereinafter with reference to Fig. 7. Fig. 7 is a flowchart showing a flow of the execution control process in the portable terminal.

As shown in Fig. 7, in the portable terminal 1, the authentication pattern composed of the swipe operation on the operating surface 2a of the touch panel display 2 and the click operation performed during the swipe operation is stored into the database 4 (S1: storage step). In general, the storage step S1 is executed in advance.

Next, the authentication request unit 21 displays the authentication points 51 (51a to 51i) as shown in Fig. 4 on the touch panel display 2 (S2). To be specific, when some operation is performed by a user in the state where the portable terminal 1 is locked, the authentication request unit 21 starts the authentication process. The authentication request unit 21 displays a pattern input screen showing the 3x3 authentication points 51 (51a to 51i) for unlocking (see Fig. 4) on the touch panel display 2. Further, the authentication request unit 21 causes the swipe detection unit 31 and the click detection unit 32 to start detection of the swipe operation and the click operation to prepare for input by a user (S2).

Then, the swipe detection unit 31 detects that a finger touches the operating surface 2a of the touch panel display 2 and then starts acquisition of the swipe operation (S3).

Then, the swipe detection unit 31 and the click detection unit 32 detect the swipe operation on the operating surface 2a of the touch panel display 2 and the click operation on the operating surface 2a of the touch panel display 2 which is performed during the swipe operation (S4: detection step). To be specific, the coordinate information of the authentication points 51 (51a to 51i) detected by the touch panel display 2 and the click information indicating detection of the presence or absence of a click on each of the authentication points 51 (51a to 51i) are acquired from the swipe detection unit 31 and the click detection unit 32, respectively.

After that, the swipe detection unit 31 detects that the finger is released from the operating surface 2a of the touch panel display 2 (S5).

When the swipe detection unit 31 detects that the finger is released from the operating surface 2a of the touch panel display 2, the touch panel control unit 22 determines whether a click is made on the authentication point (last authentication point) 51 (any one of 51a to 51i) when the finger is released from the touch panel display 2. When the touch panel control unit 22 determines that the last authentication point 51 (any one of 51a to 51i) is clicked on (YES in S6), a verification process is not performed in the next step (S7) even when the user releases the finger from the operating surface 2a and the process returns to Step S4. Then, the swipe detection unit 31 and the click detection unit 32 continue the detection of the swipe operation on the operating surface 2a of the touch panel display 2 and the click operation on the operating surface 2a of the touch panel display 2 which is performed during the swipe operation, starting from the authentication point 51 (any one of 51a to 51i) at which the user touches the operating surface 2a again.

An example in this case is described with reference to Fig. 5(b). When a user swipes the operating surface 2a from the authentication point 51i to the authentication point 51g through the authentication point 51h, clicks on the authentication point 51g and then releases the finger from the operating surface 2a, and, after that, swipes the operating surface 2a from the authentication point 51e to the authentication point 51d and then releases the finger from the operating surface 2a, the input pattern of "sequentially touching the authentication points 51i, 51h, 51g, 51e and 51d and clicking on the authentication point 51g" is output to the authentication unit 25 as the pattern to be verified against the authentication pattern.

Referring back to Fig. 7, when the touch panel control unit 22 determines that the last authentication point 51 (any one of 51a to 51i) is not clicked on (NO in S6), the input pattern until the finger is released from the touch panel display 2, which is, the input pattern composed of the swipe operation on the operating surface 2a of the touch panel display 2 and the click operation on the operating surface 2a of the touch panel display 2 performed during the swipe operation which is acquired in Steps S3 to S5, is output to the authentication unit 25 as the pattern to be verified against the authentication pattern.

An example in this case is described with reference to Fig. 5(b). When a user swipes the operating surface 2a from the authentication point 51i to the authentication point 51g through the authentication point 51h, and does not click on the last authentication point 51g, the input pattern of "sequentially touching the authentication points 51i, 51h and 51g" is output to the authentication unit 25 as the pattern to be verified against the authentication pattern.

After that, the authentication unit 25 conducts verification between the authentication pattern stored in the database 4 and the input pattern composed of the information detected in Steps S4 to S5 (S7: execution control step). When the authentication unit 25 determines that the authentication pattern and the input pattern match (YES in S7), it outputs information indicating that to the function control unit 26.

On the other hand, when the authentication unit 25 determines that the authentication data and the detected information do not match (NO in S7), it resets (discards) the input pattern composed of the information detected in Steps S3 to S5 and outputs information indicating that to the authentication request unit 21 (S9). Receiving the information from the authentication unit 25, the authentication request unit 21 displays the pattern input screen again on the touch panel display 2.

In the portable terminal 1 according to this embodiment, the authentication unit 25 conducts verification between the input pattern and the authentication pattern based on the sequence of touching the authentication point and the presence or absence of a click on each of the authentication point.

Receiving the information indicating that the authentication data and the detected information match from the authentication unit 25, the function control unit 26 executes an unlock process and displays a screen notifying that a lock is released on the touch panel display 2 (S8: execution control step).

As described above, because the portable terminal 1 according to this embodiment includes the click mechanism 10 as shown in Figs. 2(a) and 2(b), it is possible to perform not only the swipe operation but also the click operation on the touch panel display 2. It is therefore possible to use the input pattern combining the swipe operation and the click operation as the authentication pattern. This input pattern is difficult for another person to recognize the input content compared with an input pattern input by the swipe operation only, and the security level can be thereby enhanced.

Further, in the portable terminal 1 according to this embodiment, the authentication pattern composed of the swipe operation on the touch panel display 2 and the click operation performed during the swipe operation is stored, and when executing the function of the portable terminal 1, the swipe operation on the touch panel display 2 and the click operation performed during the swipe operation are detected. Then, based on the detected swipe operation and the click operation performed during the swipe operation and the authentication pattern, it is determined whether or not to execute the function of the portable terminal 1. It is thereby possible to achieve a high level of security with a simple operation on the touch panel display 2.

Further, in the portable terminal 1 according to this embodiment, the authentication pattern composed of the swipe operation on the touch panel display 2 and the click operation performed during the swipe operation is stored, and when executing the function of the portable terminal 1, the swipe operation on the touch panel display 2 and the click operation performed during the swipe operation are detected. Then, based on the input pattern composed of the detected swipe operation and the click operation performed during the swipe operation and the authentication pattern, it is determined whether or not to execute the function of the portable terminal 1. It is thereby possible to achieve a high level of security with a simple operation on the touch panel display 2.

Further, in the portable terminal according to this embodiment, when a click operation is performed when releasing the touch panel display 2, the touch panel control unit 22 detects a series of operations composed of touching the touch panel display 2 first and releasing it and then touching the touch panel display 2 again and releasing it as a single swipe operation. By such continuity, it is possible to set a complicated authentication pattern such as the authentication pattern (or the input pattern) formed by sliding a finger or the like over two points physically distant from each other, for example, and the security level can be enhanced.

Hereinbefore, the present invention has been described in detail with respect to the embodiment thereof. However, the present invention is not limited to the above-described embodiment. Various changes and modifications may be made therein without departing from the scope of the invention.

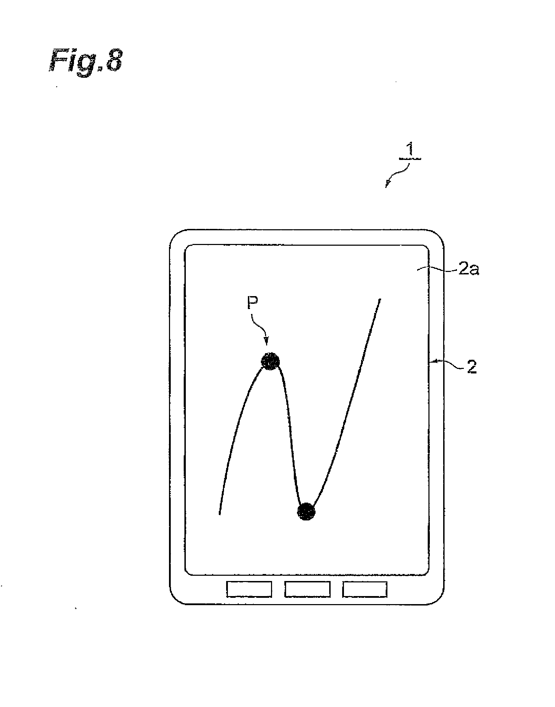

Although the authentication points 51 (51a to 51i) are displayed on the touch panel display 2, and the input pattern is input by sliding a finger or the like over the authentication points 51 (51a to 51i) in one swipe operation and then verified against the authentication pattern in the portable terminal 1 according to the embodiment descried above, the present invention is not limited thereto. For example, an input pattern P composed of a swipe operation and a click operation; in other words, an input pattern P composed of a single stroke of line (P1: trajectory) and points clicked on the line (P2, P3, press position) as shown in Fig. 8, may be used without using the authentication points 51 (51a to 51i). In this case also, the input pattern is acquired by the swipe detection unit 31 and the click detection unit 32 and verified against the authentication pattern, which has the same structure as the above input pattern P, stored in the database 4, in the same manner as in the portable terminal 1 according to the embodiment descried above. The same advantageous effects as the portable terminal 1 according to this embodiment can be obtained in this case as well.

For verification between the input pattern P and the authentication pattern, coordinate information may be used for both of information acquired by the swipe detection unit 31 and the click detection unit 32, or information detected from the swipe detection unit 31, which is a single stroke part, may be compared using the similarity in form, for example. Further, with use of the function of the touch panel control unit 22 described above, it is possible to conduct verification using an input pattern with two lines, not only a single stroke pattern, which further enhances the security level.

Further, although the 3x3 authentication points 51 (51a to 51i) as shown in Fig. 4 are displayed on the touch panel display 2 in the portable terminal 1 according to the embodiment descried above, the present invention is not limited thereto. For example, the number of authentication points to be displayed on the touch panel display 2 may be 2x2, 4x3 or the like, and the number of those points and the way they are arranged may be set freely.

Although the case of unlocking the portable terminal 1 is described as an example in the portable terminal 1 according to the embodiment descried above, the present invention is not limited thereto. For example, when an object button (menu button) for starting an email application is clicked on, the authentication request unit 21 may display the unlock screen as shown in Fig. 4.

Although the touch panel display 2 where the image is displayed on the operating surface 2a is used as an example of the touch panel in the portable terminal 1 according to the embodiment descried above, the present invention is not limited thereto. For example, when performing execution control by a method not displaying the authentication pattern, a touch panel that does not display an image but can at least detect the swipe operation and the click operation may be used.

Further, although the present invention is applied to the portable terminal in the above-described embodiment, it is not limited thereto, and the present invention may be applied also to a stationary terminal, a PDA and the like.

### Reference Signs List

1... portable terminal (information terminal), 2...touch panel display (touch panel), 2a...operating surface, 3...detection unit (detection means), 4...database (storage means), 10...click mechanism, 11...support member, 12...contact sensor, 13...board, 21...authentication request unit, 22...touch panel control unit (input control means), 23... execution control unit (execution control means), 25... authentication unit, 26...function control unit, 31...swipe detection unit, 32...click detection unit, 51...authentication point, 61...CPU, 62... main storage unit, 63...auxiliary storage unit, 64...input unit, 65... output unit

## Claims

1. An information terminal comprising:
a touch panel configured to include a press detection mechanism capable of accepting a press operation on an operating surface;
a detection means configured to detect a first operation being an operation of sliding a contact object over the operating surface of the touch panel during a period from contact to release of the contact object to/from the operating surface and a second operation being the press operation performed during the first operation through the press detection mechanism;
a storage means configured to store an authentication pattern composed of the first operation and the second operation; and
an execution control means configured to control whether to execute a function of the information terminal based on a result of verification between an input pattern composed of the first operation and the second operation detected by the detection means and the authentication pattern.

2. The information terminal according to Claim 1, further comprising:
an input control means configured to control the execution control means to form the input pattern based on an operation detected until release of the contact object from the touch panel when the press operation is not detected upon release from the touch panel by the detection means, and control the execution control means to form the input pattern including an operation detected subsequently when the press operation is detected upon release of the contact object from the touch panel by the detection means.

3. The information terminal according to Claim 1 or 2, wherein
a plurality of authentication points are displayed on the touch panel,
the detection means detects authentication points touched during the first operation and presence or absence of the second operation on each of the authentication points,
the storage means stores an authentication pattern composed of authentication points touched during the first operation and presence or absence of the second operation on each of the authentication points, and
the execution control means controls whether to execute a function of the information terminal based on a result of verification between an input pattern composed of the authentication points and the presence or absence of the second operation on each of the authentication points detected by the detection means and the authentication pattern.

4. The information terminal according to Claim 3, wherein
total nine authentication points, three by three in directions orthogonal to each other, are displayed on the touch panel.

5. The information terminal according to Claim 1 or 2, wherein
the detection means detects a trajectory of the first operation on the touch panel and a press position when the second operation is performed during the first operation,
the storage means stores an authentication pattern composed of the trajectory of the first operation on the touch panel and the press position when the second operation is performed during the first operation, and
the execution control means controls whether to execute a function of the information terminal based on a result of verification between an input pattern composed of the trajectory of the first operation and the press position when the second operation is performed during the first operation detected by the detection means and the authentication pattern.

6. The information terminal according to any one of Claims 1 to 5, wherein
to execute the function is to release a lock.

7. The information terminal according to any one of Claims 1 to 6, wherein
to execute the function is to start an application.

8. An execution control method in an information terminal with a touch panel including a press detection mechanism capable of accepting a press operation on an operating surface, the method comprising:
a detection step of detecting a first operation being an operation of sliding a contact object over the operating surface of the touch panel during a period from contact to release of the contact object to/from the operating surface and a second operation being the press operation performed during the first operation through the press detection mechanism;
a storage step of storing an authentication pattern composed of the first operation and the second operation into a storage means; and
an execution control step of controlling whether to execute a function of the information terminal based on a result of verification between an input pattern composed of the first operation and the second operation detected by the detection means and the authentication pattern.
